# EUROPÄISCHE PATENTSCHRIFT

(11) **EP 1 907 187 B1**
(45) Veröffentlichungstag und Bekanntmachung des Hinweises auf die Patenterteilung: **02.11.2011**
(21) Anmeldenummer: 06762712.5
(22) Anmeldetag: 17.07.2006
(51) Int. Cl.: B29C 44/14

(54) **VERFAHREN ZUR HERSTELLUNG EINES VERBUNDTEILS MIT MEHRFARBIGER OBERFLÄCHE**
METHOD OF PRODUCING A COMPOSITE PART HAVING A MULTICOLOURED SURFACE
PROCEDE DE PRODUCTION D'UNE PIECE COMPOSITE A SURFACE MULTICOLORE

(30) Priorität: 18.07.2005 DE 102005034257
(43) Veröffentlichungstag der Anmeldung: 09.04.2008
(73) Patentinhaber: Faurecia Innenraum Systeme GmbH, 76767 Hagenbach (DE)
(72) Erfinder: GONZÀLEZ, Luis, 90300 Appzaco Tlaxcala (MX)
(74) Vertreter: Pfenning, Meinig & Partner GbR
(86) Internationale Anmeldenummer: PCT/EP2006/007120
(87) Internationale Veröffentlichungsnummer: WO 2007/009781

(56) Entgegenhaltungen:
- EP-A- 0 314 460
- DE-A1- 10 062 825
- DE-C1- 3 610 128
- DE-C1- 3 613 879
- PATENT ABSTRACTS OF JAPAN Bd. 004, Nr. 094 (M-019), 8. Juli 1980 (1980-07-08) -& JP 55 051540 A (INOUE MTP CO LTD), 15. April 1980 (1980-04-15)
- PATENT ABSTRACTS OF JAPAN Bd. 2000, Nr. 12, 3. Januar 2001 (2001-01-03) -& JP 2000 263565 A (INOAC CORP), 26. September 2000 (2000-09-26)

## Beschreibung

Die Erfindung betrifft ein Verfahren zur Herstellung eines Verbundteils mit mehrfarbiger Oberfläche, sowie ein Verbundteil mit mehrfarbiger Oberfläche.

Verbundteile, insbesondere Verbundteile mit mehrfarbigen Oberflächen, sind bekannt. Derartige Verbundteile werden beispielsweise in der Automobilindustrie als Innenverkleidungsteile eingesetzt.

Des Weiteren ist bekannt, solche Verbundteile zweischichtig aus einem Träger und einer mehrfarbigen Folie herzustellen.

Bekannte Verfahren zur Herstellung einer mehrfarbigen Folie sind das Slushmolding-Verfahren und das Gießverfahren.

Es ist bekannt, im Slush-Verfahren eine mehrfarbige Folie dadurch herzustellen, dass bestimmte Bereiche der Werkzeugoberfläche durch Dichtungen abgetrennt sind und in dem jeweiligen Bereich die unterschiedlichen Farbzonen hergestellt werden.

Des Weiteren ist bekannt, im Slush-Verfahren eine mehrfarbige Folie dadurch herzustellen, dass ein Bereich durch eine Maske abgedeckt wird, diese nach Herstellung einer Farbschicht entnommen wird, und im Folgenden eine weitere Farbschicht aufgetragen wird, die die durch die Maske freigegebene Werkzeugoberfläche bedeckt.

Mittels eines Gießverfahrens können mehrfarbige Folien dadurch hergestellt werden, dass das Gießwerkzeug bereichsweise in Analogie zur Maskentechnik des Slush-Verfahrens mit Lacken unterschiedlicher Farbe bedeckt wird, und danach eine Kunststoffmaske, beispielsweise Polyurethan, in das Werkzeug eingegossen wird.

Um das gewünschte Verbundteil herzustellen, ist es bekannt, solche Folien in ein Schäumwerkzeug oder Spritzgusswerkzeug zu legen und zu hinterschäumen bzw. zu hinterspritzen oder zu hinterspritzprägen, gemäß dem Oberbegriff des Anspruchs 1 vgl. JP-A-55 051 540.

Problematisch an der Herstellung solcher Verbundteile ist die Herstellung der mehrfarbigen Folien.

Nachteilig an dem genannten Verfahren ist, dass die Trennung der einzelnen Farbbereiche oftmals nur in einem ungenügenden Maß erreicht werden kann. Dies liegt zum einen an unzureichenden oder fehlerhaften Dichtungssystemen, zum anderen am Fließverhalten der Kunststoffmassen.

Im Grenzbereich der beiden Farbbereiche der Folie werden die einzelnen Farben häufig durchmischt. Die Folie könnte zwar prinzipiell zur Herstellung eines Verbundteils verwendet werden, allerdings ist eine Oberfläche mit solch einer unklaren Farbtrennung üblicherweise unerwünscht.

Aufgabe der vorliegenden Erfindung ist es nun, ein Verfahren zu schaffen, dass es ermöglicht, Verbundteile mit einer mehrfarbigen Oberfläche mit einer scharfen Trennung der einzelnen Farbbereiche unter der Verwendung einer mehrfarbigen Folie, welche selbst eine unklare Trennung der einzelnen Farbbereiche aufweisen kann, herzustellen. Eine weitere Aufgabe der vorliegenden Erfindung ist es, ein Verbundteil mit einer mehrfarbigen Oberfläche zu schaffen, welches eine scharfe Trennlinie zwischen den einzelnen Farbbereichen aufweist.

Die Erfindung löst diese Aufgaben durch ein Verfahren und ein Verbundteil nach den unabhängigen Ansprüchen.

Die Erfindung schafft ein Verfahren gemäß Anspruch 1 zur Herstellung eines Verbundteils mit mehrfarbiger Oberfläche.

Durch das erfindungsgemäße Hineinziehen der Folie entlang der Trennlinie der unterschiedlichen Farbbereiche in die Kavität des Werkzeugs wird der Bereich, an den die unterschiedlichen Farbbereiche aneinandergrenzen, von der sichtseitigen Oberfläche der Folie entfernt. Die Spalten, welche durch das Hineinziehen dieser Folienbereiche entstehen, werden durch ein Zusammenführen der aneinandergrenzenden Folienbereiche geschlossen. Dann wird diese so präparierte Folie hinterschäumt und/oder hinterspritzt. Der Grenzbereich der aneinandergrenzenden Farbbereichen befindet sich somit innerhalb des auf diese Weise hergestellten Verbundteils. Eine unsaubere Farbtrennung in diesem Grenzbereich kann somit vollständig verborgen werden.

Durch die Position der Nut ist der Bereich der Folie gekennzeichnet, der in die Kavität hineingezogen werden muss. Die Abmaße der Nut sind so groß zu wählen, dass der unscharfe Grenzbereich zwischen den einzelnen Farbbereichen vollständig innerhalb der Nut liegt.

Vorteilhafterweise ist die Nut auf der Rückseite der Folie als Steg ausgebildet. Dies würde sich beispielsweise automatisch bei der Wahl einer einheitlichen Folienwandstärke ergeben.

Ein derartiger Steg oder Wulst erleichtert das Anbringen von Kräften zum Hineinziehen der entlang der Nut liegenden Folienbereiche und insbesondere das Zusammenführen der in das Innere der Kavität hineingezogenen Folienbereiche zum Schließen einer durch das teilweise Hineinziehen der Folie erzeugten Aussparung.

Das Hineinziehen und Zusammenführen der Folie ist mechanisch möglich, insbesondere aber auch per Hand durchführbar.

Nach Präparation der Folie wird die Folie hinterspritzt und/oder hinterschäumt. Hinterspritzprägen der Folie ist gleichfalls möglich. Grundsätzlich lässt sich die präparierte Folie auf beliebige Art und Weise weiterverarbeiten.

Vorteilhafte Weiterbildungen der Erfindung werden in den abhängigen Ansprüchen beschrieben.

Eine vorteilhafte Weiterbildung des Verfahrens sieht vor, dass zwischen Oberfläche der Kavität des Schäumwerkzeugs und Folie zum Halten der Folie ein Vakuum angelegt wird.

Durch das Vakuum wird die Folie in Position gehalten. Insbesondere verschiebt sich die Folie nicht, wenn man die entlang der Nut liegenden Folienbereiche in die Kavität des Werkzeugs hineinzieht und zusammenführt. Dies setzt allerdings voraus, dass die Folie in einem gewissen Maße dehnbar ist. Wäre die Folie zu steif, wäre solch eine Formveränderung nicht mehr möglich. Insbesondere ist es vorteilhaft, die Folie in einem angewärmten Zustand zu bearbeiten, beispielsweise auf einer Temperatur von oberhalb 60°C, um die notwendige Dehnung zu ermöglichen.

Das Verfahren sieht vor, dass das Werkzeug an der oberfläche seiner Kavität einen Steg aufweist, und die Kunststofffolie so positioniert wird, dass der Steg in die Öffnung der Nut eingreift.

Zum einen ermöglicht ein derartiger Steg eine bessere Positionierung der Kunststofffolie beim Positionieren der Kunststofffolie in der Kavität des Werkzeugs. Die Abmaße des Stegs sind insbesondere kleiner als die der Nut, um diese Positionierung zu erlauben.

Das Verfahren sieht vor, dass die Folie entlang des Stegs in das Innere der Kavität des Werkzeugs hineingezogen wird.

Erfindungsgemäß ist durch den Steg an der Oberfläche der Kavität der Verlauf der Trennlinie zwischen den einzelnen Farbbereichen definiert. Der Verlauf der Trennlinie ist dadurch eindeutig festgelegt.

Durch die Verwendung eines Stegs verbleibt allerdings ein Spalt auf der sichtseitigen Oberfläche der Kunststofffolie. Die Größe und die Form des Spalts sind im Wesentlichen durch die Geometrie des Stegs bestimmt. Durch die.Gestaltung des Stegs kann somit die optische Wirkung des Trennbereichs der einzelnen Farbbereiche gestaltet werden.

Um einen Spalt zu schaffen, welcher optisch nicht auffällt, bietet sich ein Steg in der Form eines spitzen Dreiecks an. Die Höhe des Dreiecks ist bevorzugt sehr gering, nur wenige Millimeter. Die Dreiecksform erlaubt es, die Folienbereiche nahezu direkt an der Spitze des Dreiecks zusammenzuführen. Durch die Spitze des aus der Oberfläche der Kavität herausstehenden dreiecksförmigen Stegs wird auch ein exakt vorherbestimmter Verlauf der Trennlinie der einzelnen Farbbereiche ermöglicht.

Eine weitere vorteilhafte Weiterbildung der Erfindung sieht vor, dass die Nut der Folie einen Breite im Bereich von 2,5 mm bis 25 mm, vorzugsweise im Bereich von 3 mm bis 7 mm aufweist, und eine Tiefe im Bereich von 2,5 mm bis 15 mm, vorzugsweise im Bereich von 3 mm bis 7 mm aufweist.

Breite und Höhe der Nut sind stark abhängig von der Dicke der Kunststofffolie, sowie von der Geometrie der Folie. Grenzen zwei unterschiedliche Farbbereiche beispielsweise entlang einer Kante ineinander, so kann an dieser Stelle die Nut andere Abmaße aufweisen, als wenn die Farbbereiche in einer gemeinsamen Ebene aneinandergrenzen. Angegebene Werte sind und können somit nur Richtwerte sein.

Insbesondere müssen diese Abmaße der Nut mit einem durch die Nut auf der Rückseite der Kunststofffolie gebildeten Steg oder Wulst betrachtet werden. Genannte Werte sind insbesondere dann vorteilhaft, wenn die aneinandergrenzenden Folienbereiche in diesem Grenzbereich eine einheitliche Wandstärke aufweisen.

Eine weitere vorteilhafte Weiterbildung der Erfindung sieht vor, dass der Steg eine Breite im Bereich von 1 mm bis 5 mm, vorzugsweise im Bereich von 1 mm bis 2 mm aufweist, und eine Höhe im Bereich von 1 mm bis 7 mm, vorzugsweise im Bereich von 1 mm bis 3 mm aufweist.

Die Größe des Stegs an der Oberfläche der Kavität des Werkzeugs ist allerdings von der Größe der Nut abhängig. Erfindungsgemäß sind die Abmaße des Stegs kleiner als die der Nut, so dass der Steg vollständig in die Nut der Kunststofffolie eingreift.

Die angegebenen Werte sind ebenfalls nur als Richtwerte zu sehen. Möchte man den Steg insbesondere zur optischen Gestaltung des Spalts, welcher durch den Steg in der Oberfläche der Kunststofffolie erzeugt wird, einsetzen, können die Werte auch außerhalb der angegebenen Bereiche liegen.

Soll der Spalt zwischen den einzelnen Farbbereichen nicht auffallen, so bietet sich eine Dreiecksform des Stegs an der Oberfläche der Kavität an, sowie eine Höhe und Breite, welche am unteren Rand der angegebenen Werte liegt.

Eine weitere vorteilhafte Weiterbildung der Erfindung sieht vor, dass die Folie eine Dicke im Bereich von 0,5 mm bis 5 mm aufweist, vorzugsweise im Bereich von 1 mm bis 2,5 mm.

Aufgrund des erfindungsgemäßen Verfahrens muss die Folie eine gewisse Dehnbarkeit aufweisen. Sind die Folien zu stark, ist das Hineinziehen und Zusammenführen der an der Nut liegenden Folienbereiche sehr problematisch.

Eine weitere vorteilhafte Weiterbildung der Erfindung sieht vor, dass die Folie in einem Gießverfahren oder einem Slush-Verfahren hergestellt wird.

Grundsätzlich ist allerdings das erfindungsgemäße Verfahren unabhängig von der Herstellung der mehrfarbigen Kunststofffolie. Wesentlich sind Materialeigenschaften sowie die Wandstärke der Folie.

Des Weiteren schafft die Erfindung ein Verbundteil, welches durch ein erfindungsgemäßes Verfahren hergestellt wird. Insbesondere ist dieses Verbundteil Teil eines Innenverkleidungsteils eines Fahrzeugs.

Beispielsweise kann solch ein Verbundteil Teil einer Instrumententafel sein, Teil einer Türverkleidung sein oder Teil einer Mittelkonsole sein.

Die Erfindung wird nun anhand eines Ausführungsbeispiels, welches zusätzlich durch mehrere Figuren skizziert wird, dargestellt. Dabei zeigt
- Fig. 1: ein Werkzeug zum Herstellen einer mehrfarbigen Kunststofffolie nach Schritt (a) des erfindungsgemäßen Verfahrens,
- Fig. 2: eine mehrfarbige Kunststofffolie nach Schritt (a) des erfindungsgemäßen Verfahrens,
- Fig. 3: eine mehrfarbige Kunststofffolie nach Schritt (c) des erfindungsgemäßen Verfahrens, und
- Fig. 4: ein nach dem erfindungsgemäßen Verfahren hergestelltes Bauteil.

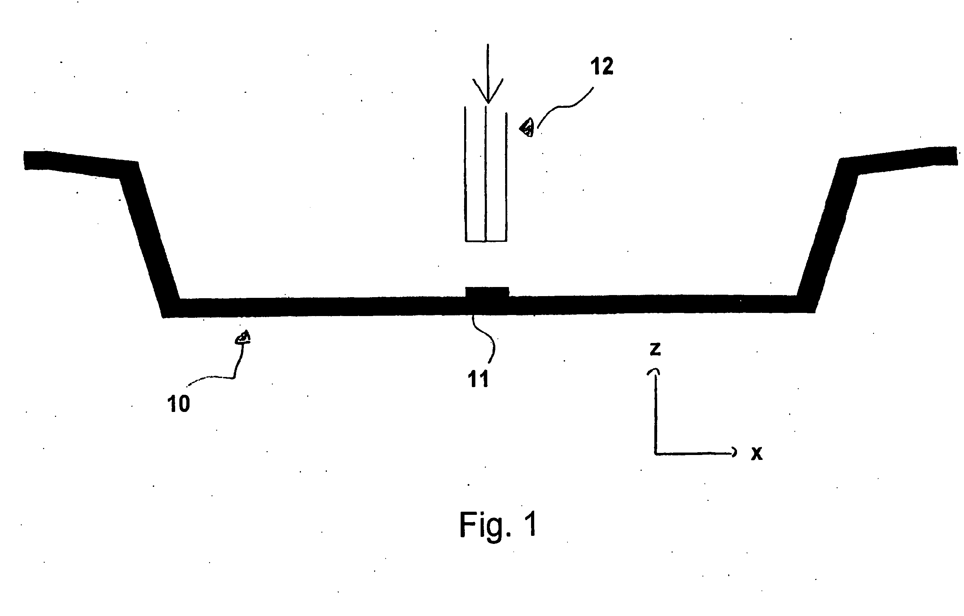

Fig. 1 zeigt ein Werkzeug zum Herstellen einer mehrfarbigen Kunststofffolie nach Schritt (a) des erfindungsgemäßen Verfahrens mittels eines Slushmolding-Verfahrens.

Gezeigt ist eine Galvanoform 10. Die Innenfläche dieser Galvanoform 10 bestimmt die Form der in diesem verfahren hergestellten Folie. Die Galvanoform 10 weist an ihrer Innenfläche einen Steg 11 auf.

Des Weiteren weist das Werkzeug eine Dichtung 12 auf, die innerhalb der Galvanoform 10 angeordnet ist, und mit der durch den Steg definierte einzelne Bereiche der Galvanoform 10 abgedichtet werden können.

Zum Herstellen der mehrfarbigen Kunststofffolie werden die durch die Dichtung 12 getrennten Bereiche durch Pulverkästen mit Kunststoffen unterschiedlicher Farbe bepulvert. Durch Erhitzen der Galvanoform 10 verflüssigt sich das Pulver und bildet einen Kunststofffilm auf der Innenseite der Galvanoform 10. Die Dichtung 12 verhindert dabei, dass die einzelnen Kunststofffilme ineinander überlaufen. Nach Abkühlen der Galvanoform 10 kann die so hergestellte Kunststofffolie dem Werkzeug entnommen werden.

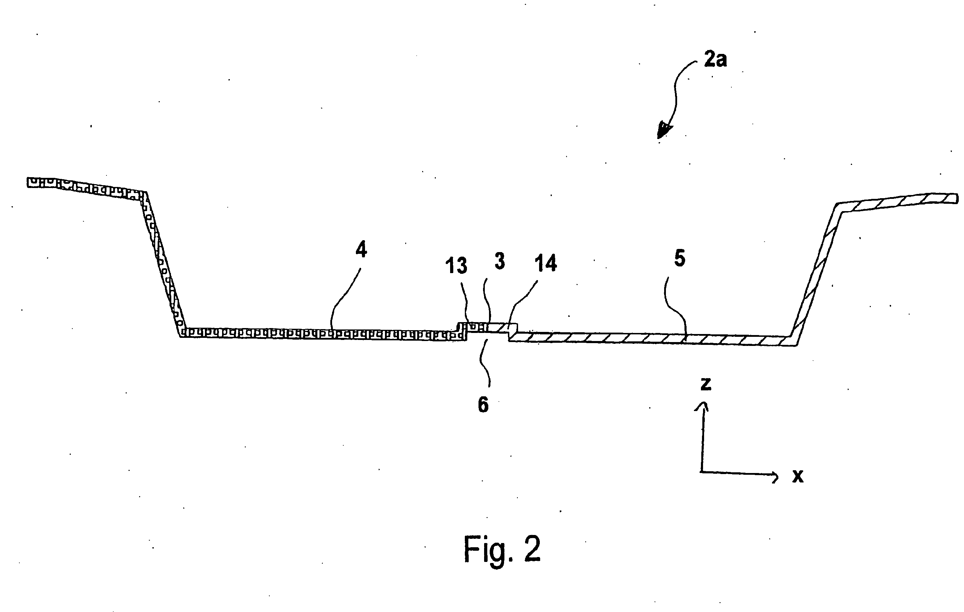

Fig. 2 zeigt eine mehrfarbige Kunststofffolie nach Schritt (a) des erfindungsgemäßen Verfahrens.

Solch eine Kunststofffolie lässt sich beispielsweise mit dem eben beschriebenen Slushmolding-Verfahren herstellen, grundsätzlich ist das erfindungsgemäße Verfahren allerdings unabhängig von der Herstellung der mehrfarbigen Kunststofffolie.

Die Kunststofffolie 2a weist einen ersten Farbbereich 4 und einen zweiten Farbbereich 5 auf. Diese beiden Farbbereiche 4 und 5 grenzen aneinander. In diesem Grenzbereich 13 und 14 der Farbbereiche 4 bzw. 5 weist die Kunststofffolie 2a eine Nut 6 auf. Die Nut 6 ist auf der Sichtseite der Kunststofffolie 2a angeordnet. Sie hat eine Breite von 5 mm (x-Richtung) und eine Tiefe von 3 mm (z-Richtung). Ihre Abmaße sind durch den Steg 11 der Galvanoform 10 (siehe Fig. 1) definiert.

Die Kunststofffolie 2a besitzt eine einheitliche Wandstärke von 2 mm. Demzufolge ist die sichtseitige Nut 6 der Kunststofffolie 2a rückseitig als Steg ausgeformt.

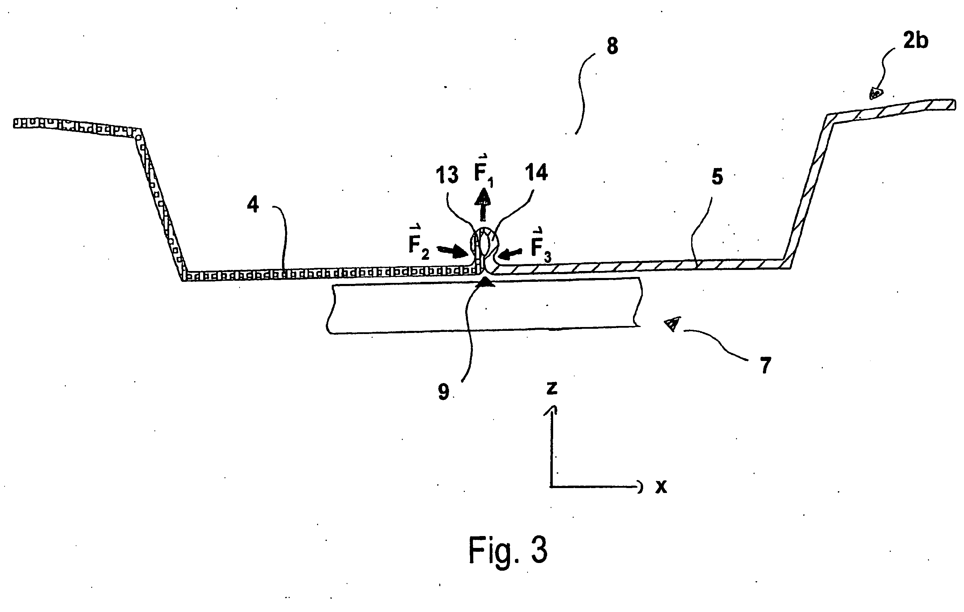

Fig. 3 zeigt eine mehrfarbige Kunststofffolie nach Schritt (c) des erfindungsgemäßen Verfahrens.

Nach Herstellung der mehrfarbigen Kunststofffolie 2a, welche Fig. 2 zeigt, wird nach dem erfindungsgemäßen Verfahren die Kunststofffolie 2a in einer Kavität 8 eines Schäumwerkzeugs 7 positioniert. Um die Positionierung zu erleichtern, weist das Schäumwerkzeug 7 an der Oberfläche seiner Kavität 8 einen Steg 9 auf. Die Kunststofffolie 2a wird nun so positioniert, dass der Steg 9 in die Öffnung der Nut 3 eingreift.

Der Steg 9 ist als gleichschenkliges Dreieck ausgebildet. Die Winkel des Dreiecks sind 45° und jeweils 67,5°. Der dreiecksförmige Steg ist so orientiert, dass der spitze Winkel von 45° senkrecht in die Kavität 8 des Schäumwerkzeugs 7 hineinragt. Die Höhe des Stegs beträgt 1,5 mm (z-Richtung).

Zwischen Oberfläche der Kavität 8 des Schäumwerkzeugs 7 und Folie 2a wird zum Halten der Folie 2a ein Vakuum angelegt. Das Schäumwerkzeug 7 weist entsprechende Öffnungen auf, um das Anlegen des Vakuums zu ermöglichen.

Des Weiteren ist das Schäumwerkzeug 7 auf eine Temperatur von 70°C vorgewärmt. Die Folie 2a befindet sich ebenfalls auf einer Temperatur von etwa 70°C.

Per Hand werden die entlang der Nut 6 liegenden Folienbereiche 13 und 14 teilweise in das Innere der Kavität 8 des Schäumwerkzeugs 7 unter Aufwendung einer Kraft F₁, welche ungefähr in z-Richtung orientiert ist, hineingezogen. Dazu wird an den an der Rückseite der Nut 6 liegenden Steg der Kunststofffolie 2a angegriffen. Gleichzeitig werden die in das Innere der Kavität 8 hineingezogenen Folienbereiche 13 und 14 zum Schließen des durch das teilweise Hineinziehen F₁ der Folie 2a erzeugten Aussparung zwischen Folie und Oberfläche des Schäumwerkzeugs 7 durch Aufwendung einer rechtsseitigen Kraft F₃ und einer linksseitigen Kraft F₂, welche ungefähr in x-Richtung orientiert sind, zusammengeführt.

Die Folie 2a wird entlang des Stegs 9 in das Innere der Kavität 8 hineingezogen. Beim Zusammenführen der Folienbereiche 13 und 14 wird der jeweilige Folienbereich gegen den jeweiligen Schenkel des dreieckförmigen Stegs 9 gepresst. Oberhalb des Stegs 9 bzw. an der Spitze des Stegs 9 werden die beiden Folienbereiche 13 und 14 aneinandergepresst.

Das Hineinziehen und Zusammenführen der Folienbereiche 13 und 14 ist durch die geringe Wandstärke der Folie und der Temperatur der Folie möglich. Durch das angelegte Vakuum ist die Folie in ihrer Position fixiert.

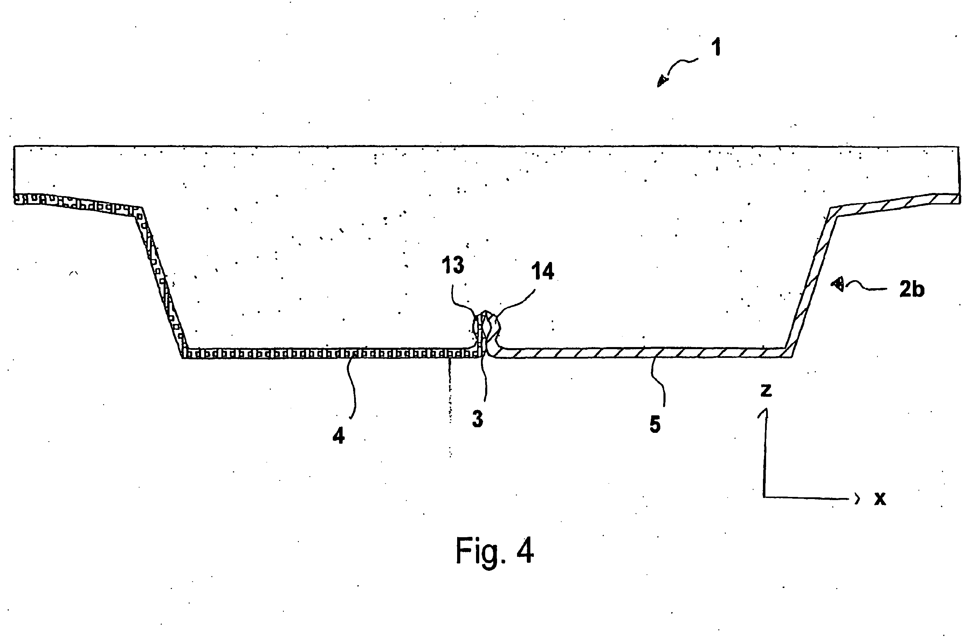

Fig. 4 zeigt ein nach dem erfindungsgemäßen Verfahren hergestelltes Verbundteil 1.

Nach der oben beschriebenen Präparation der Kunststofffolie 2a wird die präparierte Kunststofffolie 2b hinterschäumt. Die hineingezogenen Folienbereiche 13 und 14 befinden sich innerhalb der Schaumschicht des Verbundteils 1. Der Grenzbereich zwischen den Farbbereichen 4 und 5 liegt somit innerhalb der Schaumschicht und ist von außen nicht sichtbar. An der Oberfläche des Verbundteils 1 ist eine scharfe Trennlinie zwischen den einzelnen Farbbereichen 4 und 5 erreicht. Die Trennlinie verläuft entlang eines Spaltes, welcher durch die Geometrie des dreieckförmigen Stegs 9 definiert ist. Aufgrund dessen, dass die Abmaße des Stegs 9 sehr klein sind, ist dieser Spalt allerdings sehr unauffällig.

Alternativ kann anstatt des Schäumwerkzeugs 7 auch ein Spritzgusswerkzeug verwendet werden. Die präparierte Kunststofffolie 2b wird dementsprechend hinterspritzt oder hinterspritgeprägt.

Das hergestellte Verbundteil eignet sich insbesondere als Teil einer Instrumententafel, einer Türverkleidung oder einer Mittelkonsole.

## Patentansprüche

1. Verfahren zur Herstellung eines Verbundteils (1) mit mehrfarbiger Oberfläche, enthaltend die Schritte: a) Herstellen einer mehrfarbigen Kunststofffolie (2a), welche im Bereich (3) der aneinandergrenzenden Farbbereiche (4,5) eine Nut (6) aufweist, b) Positionieren der Kunststofffolie (2a) in einer Kavität (8) eines Werkzeugs (7) c) Teilweises Hineinziehen (F₁) der entlang der Nut (6) liegenden Folienbereiche (13,14) in das Innere der Kavität (8) des Werkzeugs (7) bei gleichzeitigem oder nachfolgendem Zusammenführen (F₂,F₃) der in das Innere der Kavität (8) hineingezogenen Folienbereiche zum Schließen einer durch das teilweise Hineinziehen der Folie erzeugten Aussparung zwischen Folie und Oberfläche des Werkzeugs (7), d) Hinterschäumen und/oder Hinterspritzen der Folie (2b), **gekennzeichnet dadurch, daß** das Werkzeug (7) an der Oberfläche seiner Kavität (8) einen Steg (9) aufweist und die Kunststofffolie (2a) so positioniert wird, dass der Steg (9) in die Öffnung der Nut (6) eingreift, und der Steg dreiecksförmig, mit aus der Oberfläche der Kavität herausstehender Spitze, ausgeführt ist.

2. Verfahren nach Anspruch. 1, **dadurch gekennzeichnet, dass** zwischen Oberfläche der Kavität (8) des Werkzeugs (7) und Folie (2a, 2b) zum Halten der Folie (2a, 2b) ein Vakuum angelegt wird.

3. Verfahren nach Anspruch 1, **dadurch gekennzeichnet, dass** die Folie (2a) entlang des Stegs (9) in das Innere der Kavität (8) hineingezogen (F₁) wird.

4. Verfahren nach einem der vorhergehenden Ansprüche, **dadurch gekennzeichnet, dass** die Nut (6) der Folie (2a) eine Breite im Bereich von 2,5 mm bis 25 mm, vorzugsweise im Bereich von 3 mm bis 7 mm aufweist, und eine Tiefe im Bereich von 2,5 mm bis 15 mm, vorzugsweise im Bereich von 3 mm bis 7 mm aufweist.

5. Verfahren nach einem der vorhergehenden Ansprüche, **dadurch gekennzeichnet, dass** der Steg (9) eine Breite im Bereich von 1 mm bis 5 mm, vorzugsweise im Bereich von 1 mm bis 2 mm aufweist, und eine Höhe im Bereich von 1 mm bis 7 mm, vorzugsweise im Bereich von 1 mm bis 3 mm aufweist.

6. Verfahren nach einem der vorhergehenden Ansprüche, **dadurch gekennzeichnet, dass** die Folie (2a) eine Dicke im Bereich von 0,5 mm bis 5 mm aufweist, vorzugsweise im Bereich von 1 mm bis 2,5 mm.

7. Verfahren nach einem der vorhergehenden Ansprüche, **dadurch gekennzeichnet, dass** die Folie (2a) in einem Gießverfahren oder einem Slush-Verfahren hergestellt wird.

## Claims

1. A method for manufacturing a composite part (1) with a multicoloured surface, containing the steps: a) manufacture of a multicoloured plastic film (2a) which comprises a groove (6) in the region (3) of the colour regions (4, 5) bordering one another, b) positioning the plastic film (2a) in a cavity (8) of a tool (7), c) partial pulling (F₁) of the film regions (13, 14) lying along the groove (6), into the inside of the cavity (8) of the tool (7) with a simultaneous or subsequent leading-together (F₂, F₃) of the film regions pulled into the inside of the cavity (8), for the closure of a recess between the film and the surface of the tool (7), said recess produced by the partial pulling-in of the film, d) back-foaming or back-injecting the film (2b), **characterized in that** the tool (7) comprises a web (9) on the surface of its cavity (8), and the plastic film (2a) is positioned such that the web (9) engages into the opening of the groove (6), and the web is designed in a triangular manner, with a tip projecting out of the cavity.

2. A method according to claim 1, **characterised in that** a vacuum is applied between the surface of the cavity (8) of the tool (7) and the film (2a, 2b), for holding the film (2a, 2b).

3. A method according to claim 1, **characterised in that** the film (2a) is pulled (F₁) into the inside of the cavity (8) along the web (9).

4. A method according to one of the preceding claims, **characterised in that** the groove (6) of the film (2a) has a width in the region of 2.5 mm to 25 mm, preferably in the region of 3 mm to 7 mm, and a depth in the region of 2.5 mm to 15 mm, preferably in the region of 3 mm to 7 mm.

5. A method according to one of the preceding claims, in combination with claim 3, **characterised in that** the web (9) has a width in the region of 1 mm to 5 mm, preferably in the region of 1 mm to 2 mm, and a height in the region of 1 mm to 7 mm, preferably in the region of 1 mm to 3 mm.

6. A method according to one of the preceding claims, **characterised in that** the film (2a) has a thickness in the region of 0.5 mm to 5 mm, preferably in the region of 1 mm to 2.5 mm.

7. A method according to one of the preceding claims, **characterised in that** the film (2a) is manufactured in a moulding method or in a slush method.

## Revendications

1. Procédé de production d'une pièce composite (1) à surface multicolore, comprenant les étapes suivantes : a) production d'un film plastique (2a) multicolore, qui présente une rainure (6) dans la zone de jonction (3) des zones de couleur voisines (4, 5), b) positionnement du film plastique (2a) dans une cavité (8) d'un outil (7) c) traction partielle (F₁) des parties du film plastique (13, 14) se situant le long de la rainure (6), vers l'intérieur de la cavité (8) de l'outil (7), réalisée par un rapprochement (F₂, F₃) simultané ou successif des parties du film plastique tirées vers l'intérieur de la cavité (8), en vue de clore l'évidement causé par la traction partielle du film plastique et apparu entre le film lui-même et la surface de l'outil (7), d) moussage et/ou surmoulage par injection arrière du film plastique (2b), **caractérisé en ce que** l'outil (7) présente à la surface de sa cavité (8) une âme (9), **en ce que** le film plastique (2a) est positionné de telle façon que l'âme (9) s'engrène dans l'ouverture de la rainure (6), et **en ce que** l'âme est réalisée sous forme triangulaire, sa pointe faisant saillie de la surface de la cavité.

2. Procédé selon la revendication 1, **caractérisé en ce qu'**un vide est appliqué entre la surface de la cavité (8) de l'outil (7) et le film plastique (2a, 2b) en vue de maintenir ce même film plastique (2a, 2b).

3. Procédé selon la revendication 1, **caractérisé en ce que** le film plastique (2a) est tiré (F₁) vers l'intérieur de la cavité (8) le long de l'âme (9).

4. Procédé selon l'une des revendications précédentes, **caractérisé en ce que** la rainure (6) du film plastique (2a) a une largeur comprise entre 2,5 mm et 25 mm, de préférence entre 3 mm et 7 mm, et une profondeur comprise entre 2,5 mm et 15 mm, de préférence entre 3 mm et 7 mm.

5. Procédé selon l'une des revendications précédentes, **caractérisé en ce que** l'âme (9) présente une largeur comprise entre 1 mm et 5 mm, de préférence entre 1 et 2 mm, et une hauteur comprise entre 1 mm et 7 mm, de préférence entre 1 mm et 3 mm.

6. Procédé selon l'une des revendications précédentes, **caractérisé en ce que** le film plastique (2a) présente une épaisseur comprise entre 0,5 mm et 5 mm, de préférence entre 1 mm et 2,5 mm.

7. Procédé selon l'une des revendications précédentes, **caractérisé en ce que** le film plastique (2a) est produit par coulage ou par embouage.
